(19) Europäisches Patentamt

European Patent Office

Office européen des brevets

(11) **EP 1 012 632 B1**

(12) **FASCICULE DE BREVET EUROPEEN**

(45) Date de publication et mention
de la délivrance du brevet:
**11.01.2006 Bulletin 2006/02**

(21) Numéro de dépôt: **98943959.1**

(22) Date de dépôt: **10.09.1998**

(51) Int Cl.:
*G01V 3/08* *(2006.01)*

(86) Numéro de dépôt international:
**PCT/FR1998/001940**

(87) Numéro de publication internationale:
**WO 1999/013358 (18.03.1999 Gazette 1999/11)**

(54) **PROCEDE DE LOCALISATION D'UN OBJET EN MOUVEMENT PAR MESURES MAGNETIQUES GRADIENTMETRIQUES**

VERFAHREN ZUR LOKALISIERUNG EINES SICH BEWEGENDEN OBJEKTES DURCH MESSUNG DES MAGNETISCHEN GRADIENTES

METHOD FOR LOCATING A MOVING OBJECT BY GRADIOMETRY MEASUREMENTS

(84) Etats contractants désignés:
**CH DE GB IT LI**

(30) Priorité: **11.09.1997 FR 9711311**

(43) Date de publication de la demande:
**28.06.2000 Bulletin 2000/26**

(73) Titulaire: **COMMISSARIAT A L'ENERGIE ATOMIQUE**
**75015 Paris Cédex 15 (FR)**

(72) Inventeurs:
• **DASSOT, Gilles**
  **F-06410 Biot (FR)**
• **BLANPAIN, Roland**
  **F-38380 Entre Deux Guiers (FR)**

• **FLAMENT, Bruno**
  **F-38000 Grenoble (FR)**
• **JAUFFRET, Claude**
  **F-83220 Le Pradet (FR)**

(74) Mandataire: **Weber, Etienne Nicolas et al**
  **c/o Brevatome,**
  **3, rue du Docteur Lancereaux**
  **75008 Paris (FR)**

(56) Documents cités:
**FR-A- 2 670 300**          **GB-A- 2 310 931**
**US-A- 5 387 863**

• **YAROTHSKII V A: "OPTIMUM DETECTION OF MAGNETIC DIPOLES" MEASUREMENT TECHNIQUES, vol. 35, no. 10, 1 octobre 1992, pages 1190-1194, XP000395043**

**Description**

Domaine technique

La présente invention concerne un procédé de localisation d'un objet en mouvement par mesures magnétiques gradientmétriques.

Etat de la technique

On va, tout d'abord, étudier les méthodes existantes de localisation/trajectographie basées d'une part sur l'exploitation de mesures électromagnétiques.

*Les différents moyens de mesure de champ électromagnétique*

Si l'on exploite la signature quasi-statique de la source, la bande passante utile évolue de quelques kilohertz à $10^{-5}$ Hz. Dans cette bande de fréquence, une analyse des différents moyens de mesure du champ électrique et magnétique peut être consultée dans le document référencé [1] en fin de description.

*• Les moyens de mesure vectoriels*

Le champ électrique E et le champ magnétique B sont des grandeurs intrinsèquement vectorielles. Dans le but de mesurer toute l'information disponible dans ce type de signaux, on utilise communément des systèmes directionnels permettant de mesurer chacune des trois composantes de la grandeur.

Pour les mesures électriques, on distingue tout d'abord la mesure d'une différence de potentiel entre deux électrodes. Le système électrique doit alors présenter une grande impédance d'entrée afin de ne pas perturber la mesure, comme décrit dans le document référencé [2]. Une autre technique donne accès au champ électrique dans un milieu conducteur au travers de la mesure du courant électrique circulant entre deux électrodes dont les impédances de contact sont parfaitement adaptées au milieu ambiant : on parle de « méthode à collection de courant » (voir document référencé [3]).

Les magnétomètres vectoriels mesurent également les composantes vectorielles du champ magnétique dans les directions de chacun des axes du magnétomètre. On peut citer les magnétomètres « Fluxgate » dont le principe repose sur la génération d'un courant de compensation du champ à mesurer dans un noyau ferreux caractérisé par son cycle d'hystérésis, comme décrit dans le document référencé [4]. Une autre technique repose sur une mesure directe du flux magnétique dans les barres « Fluxmètres », mais ce type d'instrumentation n'est pas très adapté à la mesure des champs magnétiques à basses fréquences. Enfin, les magnétomètres à SQUID (« Superconducting Quantum Interference Device »), comme décrit dans le document référencé [5], sont parmi les plus performants puisque leur résolution peut atteindre $10^{-6}$nT.Hz$^{-1/2}$ (le nanoTesla ou nT étant l'unité habituellement employée). Leur technologie supraconductrice nécessite un module cryogénique coûteux et délicat à mettre en oeuvre et leur grande précision conduit en général à une utilisation en gradientmètre : la différence de deux mesures proches est équivalente à une différenciation qui élimine automatiquement les sources de bruit éloignées.

*• Les magnétomètres scalaires*

Une difficulté sévère des mesures de champ magnétique réside dans la présence du champ magnétique terrestre, que l'on peut considérer comme constant dans le temps pour les échelles considérées, et dont l'amplitude est de 45000nT sous nos latitudes. Or, il n'est pas toujours possible de garantir l'absence de mouvement de la direction de mesure, et lorsque ces déplacements induisent des variations temporelles du champ dans la bande de fréquence utile, leur compensation est très délicate. A titre d'exemple, un mouvement de un degré dans un champ de 45000nT engendre un bruit cent fois plus important que le niveau de bruit des capteurs dans la bande de zéro à un Hertz.

Les magnétomètres scalaires s'affranchissent de cette difficulté en mesurant le module du champ magnétique total, c'est-à-dire le module de la somme vectorielle du champ magnétique terrestre (environ 45000nT en France) et de la perturbation vectorielle considérée (quelques nT). Les sondes à résonance magnétique nucléaire mesurent ainsi la fréquence de précession des protons ou des électrons (fréquence de Larmor), qui est proportionnelle au module du champ ambiant. La résolution atteint $10^{-3}$nT.Hz$^{-1/2}$.

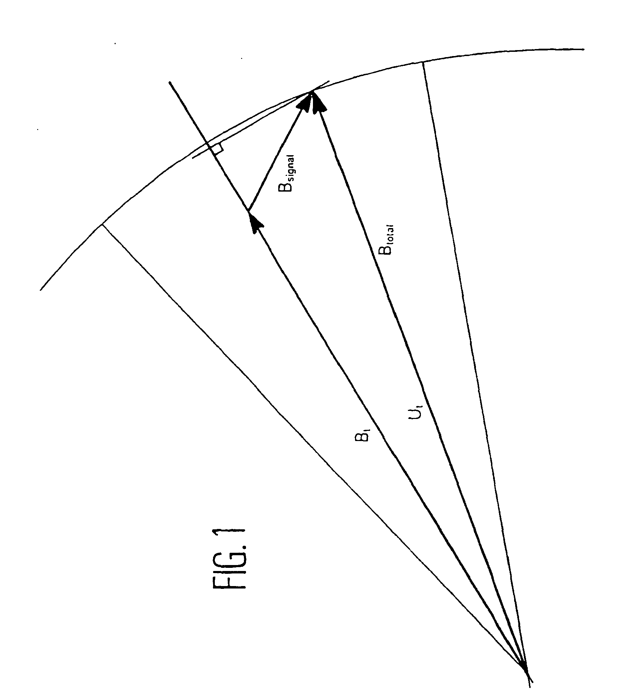

Etant donné la disproportion relative entre le module du champ terrestre et la valeur de la perturbation due à la présence de l'objet, une bonne approximation, comme décrit dans le document référencé [6], consiste à considérer que les capteurs mesurent le module du champ terrestre plus la projection de la perturbation sur le vecteur champ terrestre, comme représenté sur la figure 1. Cette figure 1 illustre la comparaison entre d'une part la somme vectorielle du champ magnétique terrestre $B_t$, et de la perturbation magnétostatique à mesurer $B_{signal}$ et d'autre part, la somme algébrique du champ magnétique terrestre et de la projection de la perturbation sur le vecteur champ magnétique terrestre. Les magnétomètres scalaires mesurent $B_{total}$ et non pas $B_{signal}$. En supposant qu'un filtrage passe-haut a permis d'éliminer la composante continue et donc le module du champ terrestre, la mesure magnétique scalaire s'écrit alors :

$$B_{scal} = B_{signal} . u_t \qquad (1)$$

Outre les précisions atteintes, l'un des intérêts de ces dispositifs réside dans l'absence de direction de mesure, ce qui simplifie leur emploi : les sondes peuvent être placées dans tout système mobile et sont, de manière générale, plus faciles à déployer que les systèmes vectoriels.

Le document référencé [7] insiste cependant sur la dégénérescence que constitue la projection sur un vecteur constant (le champ terrestre) d'une grandeur essentiellement vectorielle (la perturbation). Ce type de magnétomètre est donc classiquement utilisé en détection mais la localisation de sources à partir d'un seul site d'observation n'a encore jamais été résolue grâce à ce type de capteur.

*• Les dispositifs gradientmétriques pour la mesure du champ magnétique*

Dans le cas des dispositifs magnétiques vectoriels ou scalaires, on rencontre deux types de mesure : la mesure de champ, qui est la technique de base puisque les capteurs fournissent en général des grandeurs homogènes au champ magnétique, et la mesure du gradient spatial du champ.

La mesure de gradient consiste pour les magnétomètres SQUID à réaliser une différence de deux mesures spatialement proches, ce qui correspond intrinsèquement à une différenciation.

Cette technique permet en pratique d'éliminer la contribution des sources lointaines qui sont en général des sources de bruit (champ magnétique terrestre, bruit géomagnétique, ....). Ainsi, bien que les lois de décroissance de l'amplitude des signaux soient dégradées du fait de la différenciation ($1/r^4$ au lieu de $1/r^3$ pour les mesures de champ), la meilleure réduction des bruits perturbateurs peut conduire à des portées équivalentes (par exemple les SQUID).

On note par ailleurs que certaines techniques de localisation s'appuient intrinsèquement sur les mesures de gradient, comme par exemple les techniques de magnéto-encéphalographie (MEG). C'est également le cas de l'invention, ainsi que de la technique la plus voisine abordée dans la suite.

Une difficulté réside dans le réglage de la longueur de base du gradientmètre : on peut fixer cette longueur en réalisant une étude paramétrique basée sur des courbes COR (caractéristiques opérationnelles du détecteur ou « Curves of the Operating Receptor ») de détection, qui sont un outil classique de la théorie de la détection, tout en respectant l'hypothèse d'une mesure différentielle : on veille donc à ce que l'écartement des capteurs reste faible vis-à-vis de l'éloignement de la source.

Cette dernière contrainte permet intrinsèquement de parler de « site d'observation unique », y compris lorsque plusieurs capteurs sont utilisés pour former des gradientmètres. Dans ce cas, on considère que le dispositif de mesure gradientmétrique dans son ensemble constitue un unique site de mesure.

*Exploitation des indiscrétions magnétostatiques en localisation*

On considère à présent les techniques magnétostatiques de localisation/ trajectographie exploitant un seul site d'observation.

L'indiscrétion magnétostatique d'un bâtiment ou d'un véhicule est due aux propriétés ferromagnétiques de ses matériaux de construction : charpente métallique, tôles, moteurs, arbres d'hélices, etc... Ce type d'objet est modélisé avec une bonne précision par un dipôle magnétique unique, dès lors que le système de mesure est éloigné de quelques fois la plus grande longueur de l'objet.

Le moment magnétique M de cet objet se décompose alors en deux parties :

- Une aimantation permanente : cette aimantation reflète l'histoire magnétique de l'objet, il s'agit d'une aimantation constante dans un repère lié à l'objet quelle que soit la direction du champ magnétique ambiant.
- Une aimantation induite, qui est due à la susceptibilité magnétique des matériaux ferromagnétiques. En présence d'une excitation magnétique extérieure, ici le champ magnétique terrestre, les dipôles ferromagnétiques élémentaires s'orientent dans une direction commune et produisent une résultante non nulle.

Dans le cas d'un mouvement rectiligne uniforme, l'orientation de l'objet est constante dans le champ magnétique terrestre, dont la variabilité spatiale est négligeable aux échelles considérées : la partie induite du moment magnétique ne varie donc ni au cours du temps, ni dans l'espace. Dans le cadre de cette hypothèse sur le déplacement de la source, le moment total M de l'objet magnétique est supposé constant en temps et en espace.

Le champ magnétostatique d'un objet ferromagnétique se présente comme une perturbation du champ magnétique terrestre. Cette perturbation de nature vectorielle s'écrit :

$$ B = \frac{\mu_0}{4\pi} \frac{3u.\,u^{\top} - I}{r^3} M \qquad (2) $$

où r note le vecteur de la position relative de la source par rapport au magnétomètre, r note le module de r, u représente le vecteur élémentaire dans cette même direction (u=r/r) et I est la matrice 3x3 identité. On remarque que cette expression est fortement non-linéaire pour ce qui concerne les paramètres géométriques, alors qu'elle est linéaire par rapport au moment magnétique.

Dans un repère cartésien classique, cette expression devient :

$$ \begin{bmatrix} B_x \\ B_y \\ B_z \end{bmatrix} = \frac{\mu_0}{4\pi r^5} \begin{bmatrix} 3\Delta x^2 - r^2 & 3\Delta x \Delta y & 3\Delta x \Delta z \\ 3\Delta y \Delta x & 3\Delta y^2 - r^2 & 3\Delta y \Delta z \\ 3\Delta z \Delta x & 3\Delta z \Delta y & 3\Delta z^2 - r^2 \end{bmatrix} \begin{bmatrix} m_x \\ m_y \\ m_z \end{bmatrix} \qquad (3) $$

$$ \text{où} \quad \begin{cases} \Delta x = x - x_c \\ r = \sqrt{\Delta x^2 + \Delta y^2 + \Delta z^2} \end{cases} $$

où x, y et z représentent les coordonnées de la source, $x_c$, $y_c$ et $z_c$ les coordonnées du capteur, r la distance polaire de la source au capteur et $m_x$, $m_y$ et $m_z$ chacune des composantes du moment magnétique de la source dans le repère cartésien.

Comme souligné précédemment, il existe des dispositifs qui donnent accès aux gradients du champ magnétique, c'est-à-dire à sa dérivée spatiale dans une direction donnée. Dans un repère à trois dimensions donné, l'expression des gradients du champ magnétique est donc un tenseur de neuf composantes dont certaines sont liées entre elles. Les lois de Maxwell pour la magnétostatique stipulent en effet que la divergence du champ magnétique, c'est-à-dire la trace du tenseur des gradients, est nulle, et que son rotationnel est nul également, c'est-à-dire que le tenseur est symétrique. Au total, le tenseur des $G_{ij}$ est donc composé de cinq termes indépendants. Dans un repère cartésien, ce tenseur s'écrit :

$$ G = \begin{bmatrix} \dfrac{\partial B_x}{\partial x} & \dfrac{\partial B_x}{\partial y} & \dfrac{\partial B_x}{\partial z} \\ G_{12} & \dfrac{\partial B_y}{\partial y} & \dfrac{\partial B_y}{\partial z} \\ G_{13} & G_{23} & -G_{11} - G_{22} \end{bmatrix} \qquad (4) $$

Comme l'indique l'équation (3), on doit résoudre un problème à six paramètres constants si on s'intéresse à un dipôle magnétique fixe, à neuf paramètres constants si le dipôle est animé d'un mouvement rectiligne uniforme (le vecteur de paramètre précédent augmenté des trois paramètres de vitesse), et à six paramètres variables en fonction du temps dans le cas d'une trajectoire quelconque (x, y, z, $m_x$, $m_y$, $m_z$).

• Utilisation des grandeurs vectorielles

Une approche, proposée dans le document référencé [5] consiste à résoudre le problème direct en utilisant le tenseur de gradient vectoriel complet qui fournit neuf mesures. Sur les neuf composantes, seules cinq sont réellement indépendantes et une mesure additionnelle de champ total s'avère donc nécessaire pour rendre observable à tout instant le problème de la localisation d'un objet fixe. Cette méthode ne fait aucune hypothèse sur le déplacement de la source et calcule les six paramètres caractéristiques du problème à chaque itération. Les auteurs notent sa forte sensibilité au bruit de mesure.

Une diagonalisation du tenseur des gradients rend la résolution plus facile. On obtient alors la solution vraie et trois solutions fantômes. Si la source est en mouvement, les solutions fantômes peuvent alors être éliminées grâce à leur comportement temporel. On peut également avoir accès à la vitesse de la source.

Dans le document référencé [8] l'auteur propose un système basé sur deux mesures vectorielles de champ réalisées en deux sites de mesure distincts. Dans cette application, il s'agit de localiser un dipôle alternatif de fréquence et de moment connu pour étudier le déplacement d'éléments de digue soumis à la houle. Le module du moment étant connu, il faut estimer à chaque instant cinq paramètres variables dans le temps. Six mesures indépendantes permettent d'inverser le problème.

En conclusion, on peut souligner que la multiplicité des composantes mesurées grâce aux systèmes de mesures vectorielles permet de s'intéresser au problème direct sans hypothèse sur le mouvement de la source. Dans ce cas, le nombre élevé d'inconnues conduit cependant à l'utilisation de plusieurs sites d'observation. Seule l'approche utilisant le tenseur de gradient complet permet de conduire à un système complexe mais assimilable à un unique site d'observation. Comme on l'a déjà souligné, les dispositifs vectoriels posent cependant le problème délicat du positionnement des axes de mesure.

• *Utilisation de grandeurs scalaires*

Quelques auteurs ont étudié les possibilités de localisation/trajectographie sans hypothèse sur le mouvement de la source grâce à plusieurs magnétomètres scalaires géographiquement distribués. Dans tous les cas, les auteurs se sont heurtés au mauvais conditionnement du problème et les tests sont donc réalisés avec des initialisations proches des valeurs vraies, car les minima locaux sont très nombreux.

Une autre approche consiste à réduire le nombre d'inconnues et à exploiter des hypothèses sur le déplacement de la source quand cela est possible. Une hypothèse couramment rencontrée est celle du mouvement rectiligne uniforme. Cette hypothèse est tout à fait justifiable dans le contexte sous-marin, car les sources évoluent en suivant des caps, et peut également convenir à d'autres utilisations, comme les applications autoroutières.

Le document référencé [6] présente une étude complète de la signature mesurée par un capteur directionnel dans le cas de ce genre de déplacement relatif. Il montre ainsi que les signaux se décomposent sur une base de signaux orthogonaux, nommée base de Anderson, qui dépendent de deux paramètres : la distance entre le capteur et le point d'approche minimale CPA (« Closest Point Of Approach » en anglais) divisé par la vitesse de la source et la distance de la source au CPA divisée par la vitesse :

$$\left\{ \frac{D}{v} \,,\, \frac{x - x_0}{v} = \frac{E}{v} \right\} \tag{5}$$

Cette décomposition s'opère quelle que soit la direction de mesure, et donc particulièrement dans la direction du champ magnétique terrestre pour les capteurs de type scalaire.

Le document référencé [6] présente alors la technique du filtrage adapté multidimensionnel, qui constitue un outil de détection/estimation optimal dans du bruit blanc au sens d'un critère quadratique du type Neyman-Pearson.

Cet outil nécessite en pratique une algorithmie adaptée et des puissances de calcul non négligeables pour travailler en temps réel. Une implémentation réellement opérationnelle est décrite et des études paramétriques, telles que les courbes COR de détection, sont établies dans le document référencé [7]. L'auteur propose également une méthode sous optimale de localisation basée sur les mesures de trois sites d'observation dans le cas où la trajectoire est contenue dans le plan des capteurs. Dans cette hypothèse, un seul site d'observation ne donne aucune information de localisation car les paramètres de l'équation (5) conduisent à une double ambiguïté, à la fois en azimut et en distance, et deux sites d'observation conduisent à deux ou quatre solutions fantômes suivant l'algorithmie utilisée pour exploiter les signatures magnétiques.

Le document référencé [9] s'intéresse au pistage magnétique aéroporté : l'avion vole à vitesse et cap constants et la source sous-marine est considérée comme immobile vu la différence de vitesse entre l'observateur et l'observé. Dans ce cas, ce sont les capteurs qui évoluent en mouvement rectiligne uniforme par rapport à la source, mais ce sujet correspond à un problème dual de celui qui est considéré et est tout à fait transposable. Des capteurs scalaires sont installés en bout d'aile et l'auteur utilise des mesures différentielles soit entre les deux magnétomètres au même instant, soit entre deux mesures successives fournies par le même capteur. La technique de localisation exploite seulement un petit nombre de mesures successives, puis la méthode est itérée avec de nouvelles mesures. Ceci permet d'assurer que la vitesse de la source est négligeable par rapport à l'avion mais permet seulement de travailler avec des rapports signal à bruit élevés. Une autre limitation de cette méthode réside dans les ordres de grandeurs indiqués par la maquette qui est décrite dans l'article : l'auteur suppose que l'avion vole très proche de l'eau et que son envergure est du même ordre de grandeur que la profondeur de la source. De ce fait, les mesures réalisées ne sont pas de type gradientmétrique et s'apparentent plutôt à N mesures géographiquement distribuées.

Les techniques aéroportées actuellement opérationnelles s'intéressent principalement à la détection et les méthodes de localisation reposent sur au moins deux passages à l'aplomb de la source, ce qui s'apparente en fait à deux sites d'observation distincts.

*Exploitation des indiscrétions électromagnétiques très basse fréquence en localisation*

Concernant l'exploitation des signatures électromagnétiques très basse fréquence, par exemple issues des courants de corrosion des navires, on peut citer les documents référencés [10] et [11].

Le premier démontre par une campagne d'expérimentation l'existence de telles signatures. Dans le cas où la source se déplace selon un mouvement rectiligne uniforme, l'auteur propose d'exploiter l'enveloppe de la signature et démontre l'existence d'une base de Anderson du même type que celle décrite dans le document référencé [6] dans le cas des signaux magnétostatiques. Les paramètres estimés sont alors du même type et ne permettent pas de localiser la source à partir d'un seul site de mesure.

Le deuxième propose une inversion du problème de la localisation d'un dipôle électrique fixe, mais cette technique exploite deux sites de mesure distincts donnant chacun accès aux trois composantes du champ électrique.

Dans l'exposé de l'invention, on se restreint au cas d'un dipôle magnétostatique. Cependant, à l'instar du document référencé [10], on peut utiliser une expression équivalente à l'équation (2) pour l'enveloppe quasi-statique des signaux magnétiques très basse fréquence dus aux courants de corrosion. De la même manière que pour les signaux magnétostatiques, ces signatures peuvent être mesurées par des magnétomètres scalaires pourvu que leur bande passante le permette.

Le document référencé [16] décrit un procédé pour exploiter le déplacement relatif d'un corps ferromagnétique avec chacun des capteurs d'un ensemble de capteurs vectoriels répartis dans l'espace et non regroupés en un site unique.

Le document référencé [17] décrit un détecteur optimal pour un système géophysique de détection et de mesure de paramètres d'objets avec un champ magnétique dipôle, le signal utile d'un tel système étant une fonction scalaire de la position du champ vectoriel du dipôle magnétique.

Par contre l'invention a pour objet un système de traitement de l'information permettant de trajectographier une source en mouvement rectiligne uniforme à partir d'un seul site d'observation, en utilisant un type de capteurs, a priori trop peu informatifs pour la localisation à partir d'un seul site d'observation, et qui se distingue des dispositifs de l'art antérieur par sa simplicité d'emploi et par sa compatibilité à des applications embarquées.

Exposé de l'invention

L'invention concerne un procédé de localisation d'un objet en mouvement caractérisé en ce qu'il comporte les étapes suivantes :

- acquisition de mesures scalaires par un ensemble de capteurs électromagnétiques regroupés en un site et dont la position est connue à chaque instant ;
- approximation de la trajectoire de l'objet par un modèle ;
- combinaison des mesures issues de chaque capteur pour obtenir des mesures de gradient spatiaux représentatifs de la perturbation électromagnétique vectorielle de l'objet en mouvement ;
- estimation d'un vecteur de paramètres caractéristique du modèle en fonction des mesures de gradient et en fonction de la position des capteurs ;
- détermination de la position de l'objet en fonction de la position des capteurs et du vecteur de paramètres.

Avantageusement on peut avoir les variantes suivantes :

- dans une première variante, dont dépendent les autres, on utilise des mesures électromagnétiques issues de magnétomètres scalaires utilisés en gradientmètres ;
- dans une deuxième variante, le mouvement de l'objet est modélisé par un mouvement rectiligne uniforme, le vecteur de paramètre étant $(\theta, r/v, v/v)$, $\theta$ étant l'azimut de l'objet à un instant de référence pris par rapport au Nord, $r$ la distance source-capteur au même instant de référence, $v$ la vitesse de l'objet et $v$ le module de la vitesse ; il existe une solution fantôme de la vraie solution qui est $(\theta+\pi, r/v, v/v)$ ;
- dans une troisième variante, on réduit le nombre de degrés de liberté du problème de trajectographie, par exemple on connaît un ensemble de trajectoires possibles de l'objet ;

- dans une quatrième variante, on effectue une combinaison des mesures magnétiques avec des mesures acoustiques permettant de réduire l'ensemble des solutions ; en ajoutant des équations de mesures issues des informations accoustiques aux équations de mesure issus des informations électromagnétiques ;
- dans une cinquième variante (raffinement de la troisième variante), on associe la méthode azimutale et le phénomène Doppler observé dans le cas de sources rayonnant un signal bande étroite autour d'une fréquence centrale stable ;
- dans une sixième variante, on réalise une manoeuvre du dispositif d'acquisition des mesures, par exemple rotation, déplacement sur lui-même ou non, pour obtenir des mesures électromagnétiques en un autre lieu ou sous un autre angle permettant ainsi de réduire l'ensemble des solutions en diversifiant l'ensemble des points d'observations.

L'invention permet de s'affranchir de l'utilisation des systèmes vectoriels pour la mesure magnétique. A la place, on présente une technique qui s'appuie sur des mesures scalaires du champ. Ces capteurs ne possèdent pas de direction de mesure privilégiée, ce qui rend la mesure magnétique indépendante de l'orientation du dispositif. Dans certaines applications, cette contrainte est indispensable (applications marines, capteurs en mouvement) et elle permet dans tous les autres cas de déployer les dispositifs beaucoup plus simplement et rapidement.

Malgré la perte d'information due à l'utilisation de magnétomètres scalaires pour mesurer des grandeurs vectorielles, l'invention met en oeuvre un unique site d'observation.

Dans l'invention, ces capteurs scalaires sont disposés en gradientmètre dans un espace réduit relativement aux dimensions de l'application. Afin de ne pas réintroduire une direction de mesure dans le dispositif, on propose d'utiliser un algorithme qui nécessite seulement la connaissance de la position des capteurs. Ce faisant, aucune hypothèse contraignante sur l'évolution du système gradientmétrique n'est nécessaire : système rigide, fixe ou en déplacement strictement rectiligne uniforme. Ceci est particulièrement intéressant dans le cas où les capteurs sont placés dans des systèmes mobiles, par exemple en bout d'aile d'avion, en « oiseau », « poisson », ou bouées, ...

Ce type de mesure scalaire peut être obtenu à partir de trois magnétomètres vectoriels solidaires.

Devant la complexité du problème de localisation, les systèmes vectoriels semblaient a priori incontournables, surtout à partir d'un unique site d'observation. Pour pallier cette difficulté, l'invention exploite une hypothèse sur le déplacement de la source, ce qui permet de reconditionner le problème.

Si l'invention ne garantit pas l'observabilité complète du phénomène, elle permet d'estimer un paramètre remarquable pour un dispositif monosite : l'azimut de la source à un instant donné.

L'ambiguïté de localisation réside seulement dans le paramètre noté r/V. L'invention comporte diverses variantes où la connaissance de ce paramètre peut être facilement introduite, ce qui conduit alors à une observabilité presque complète (une solution fantôme peut exister en fonction de l'application) ou à une observabilité complète en trois dimensions dans les cas plus favorables avec manoeuvre.

Comme défini précédemment différentes variantes sont possibles : restriction de nombre de degrés de liberté du problème, la fusion avec d'autres indiscrétions avec par exemple la fusion acoustique bande étroite, le déplacement du porteur avec au moins une manoeuvre pour rendre le problème observable.

Le procédé de l'invention permet de combiner plusieurs types de mesures issues de phénomènes physiques différents tels que les phénomènes acoustiques (cités plus haut), les phénomènes large bande, les phénomènes électromagnétiques engendrés par le rebouclage des courants de corrosion par la mer ou l'émission du réseau de bord.

Ainsi, pour exploiter le phénomène physique large bande associé à l'émission électromagnétique d'une source (navire) due aux courants de corrosion modulés par le système de propulsion, on dispose de magnétomètres scalaires large bande et éventuellement d'électromètres. La théorie de ce phénomène est explicitée dans le document référencé [10]. Les mesures sont traitées de la même manière que précédemment : en prenant en compte les composantes du moment dipôlaire électrique de la source (supposé horizontal avec une bonne approximation, soit une composante) et la fréquence de modulation f0 qui peut être estimée à l'aide d'un algorithme d'analyse spectrale haute résolution.

D'autres phénomènes électromagnétiques peuvent être exploités en milieu marin comme l'émission électomagnétique engendrée par le rebouclage des courants de corrosion par la mer ou l'émission du réseau électrique du navire. Leur prise en compte dans le système proposé est possible, il suffit de bien poser le problème d'observabilité correspondant et intégrer dans les vecteurs de mesure et d'état les paramètres supplémentaires associés.

Brève description des dessins

- La figure 1 illustre la comparaison entre, d'une part, la somme vectorielle du champ magnétique terrestre $B_t$ et de la perturbation magnétostatique à mesurer $B_{signal}$ et d'autre part, la somme algébrique du champ magnétique terrestre et de la projection de la perturbation sur le champ magnétique terrestre dans un dispositif de l'art antérieur ;
- la figure 2 illustre le synoptique du procédé de l'invention ;
- la figure 3 illustre un exemple d'une géométrie de passage d'une source magnétostatique par rapport à un système de mesure gradientmétrique scalaire ;

- la figure 4 illustre la géométrie de passage d'une source magnétostatique et acoustique en mouvement rectiligne uniforme relativement à un dispositif gradientmétrique et à un capteur acoustique ;
- les figures 5A à 5C illustrent les signatures relevées en un site par trois dispositifs gradientmétriques scalaires dirigés respectivement dans les directions Nord, Est, et Vertical vers le bas ;
- la figure 6 illustre la grille d'initialisation d'un algorithme de minimisation par itérations successives ;
- la figure 7 illustre la représentation des neuf initialisations qui convergent vers un minimum global ;
- la figure 8 illustre la représentation des variables géométriques d'un vecteur pour les initialisations ayant convergé vers un minimum global ;
- les figures 9A à 9H illustrent des simulations de Monte-Carlo de 500 réalisations ;
- la figure 10 illustre le dessin de principe d'un système d'analyse du trafic routier basé sur un site d'instrumentation unique placé à proximité des voies de circulation ;
- la figure 11 illustre un schéma de principe d'une application sous-marine ;
- les figures 12A à 12C illustrent différents types de manoeuvres permettant de rendre le vecteur d'état de la localisation observable.

Exposé détaillé d'un mode de réalisation

On se place dans le plan défini par la trajectoire de la source et par le site d'observation. Il est également possible de supposer le plan d'évolution de la source connu par rapport au site d'observation. D'une manière générale, ce dernier peut être lui-même animé d'un mouvement quelconque mais connu.

L'invention exploite la contribution quasi-statique de la signature électromagnétique de la source. Ce type de signature peut être dû à la présence d'éléments ferromagnétiques dans les matériaux de construction du mobile et correspond alors à une contribution magnétostatique. Dans le cas de sources sous-marines, il peut également s'agir de l'enveloppe quasi-statique de la signature électromagnétique très basse fréquence, telle qu'elle a pu être mise en évidence dans le document référencé [10].

Dans l'invention, les mesures électromagnétiques sont issues de magnétomètres scalaires utilisés en gradientmètre, dont la position est connue à chaque instant. Ces capteurs donnent accès au module du signal magnétique utile, par opposition aux capteurs vectoriels, magnétiques ou électriques, qui mesurent une ou plusieurs composantes du signal électromagnétique.

L'invention donne accès, à partir d'un site unique d'observation et relativement à un instant de référence, à l'azimut de la source, à la direction et au sens de son vecteur vitesse, ainsi qu'au paramètre r/V, où r est la distance de la source au capteur et V est le module de la vitesse. Le paramètre r/V souligne l'ambiguïté en distance liée à ce type de mesure.

Lorsqu'on peut connaître a priori ou estimer grâce à une technique complémentaire (Doppler acoustique, radar, distancemètre laser, ...) l'une des composantes du vecteur vitesse ou son module ou une distance source-capteur à au moins un instant de référence, le problème de la trajectographie dans le plan est alors observable à une unique solution fantôme près.

On détaille dans l'invention une solution basée sur l'exploitation du phénomène Doppler pour les sources acoustiques bande étroite ainsi qu'une application industrielle exploitant de l'information a priori, mais d'autres solutions, éventuellement actives, sont parfaitement envisageables en fonction du domaine d'application et des indiscrétions émises par la source.

Enfin, lorsque le dispositif de mesure est en mouvement et peut être manoeuvré, il est possible de rendre le problème de la localisation de l'objet complètement observable en trois dimensions grâce à ces manoeuvres.

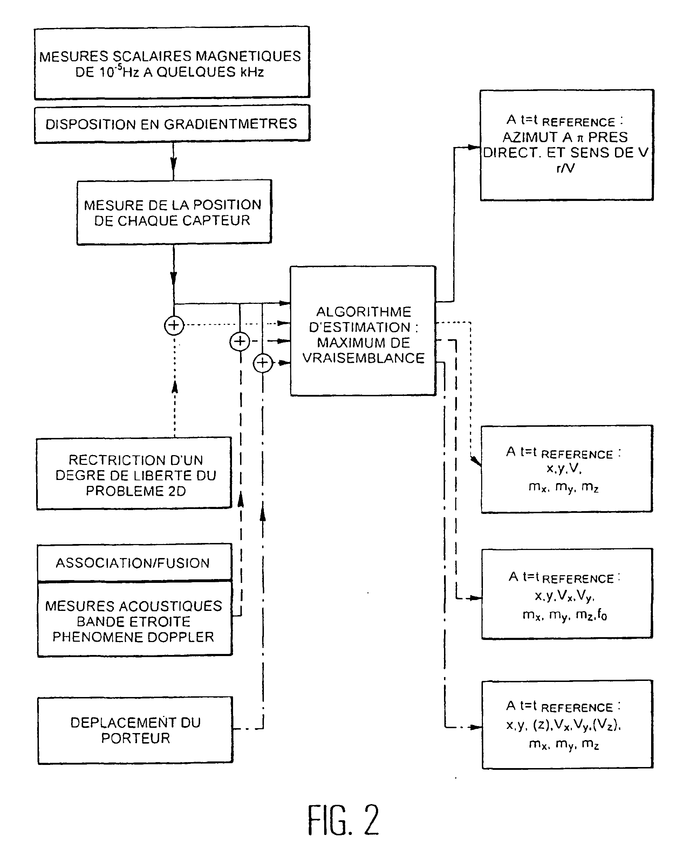

La figure 2 illustre le synoptique du procédé de l'invention, avec les différentes variantes possibles.

*Estimation de l'azimut de la source à partir d'un seul site de mesures gradientmétriques*

Dans l'état de l'art précédent, on a mis en évidence le fait que le nombre important de variables à estimer pour résoudre le problème de la localisation/trajectographie nécessite une grande richesse d'information et donc, a priori, des mesures vectorielles soit issues de plusieurs sites d'observation, soit donnant accès au tenseur complet des gradients du champ magnétique. On a cependant souligné les difficultés d'utilisation des moyens de mesures vectoriels, spécialement en milieu marin ou pour les applications embarquées.

L'invention propose d'utiliser des mesures gradientmétriques scalaires réalisées en un seul site d'observation. Afin d'exploiter pleinement la souplesse de déploiement d'un tel système à base de capteurs scalaires, on décrit une algorithmie qui nécessite seulement le connaissance de la position des capteurs à chaque instant : ce faisant, aucune hypothèse contraignante (système rigide, fixe ou en déplacement strictement rectiligne uniforme) sur l'évolution du système gradientmétrique n'est nécessaire, hormis pour résoudre certains problèmes d'observabilité.

L'invention exploite, pour l'estimation du vecteur de paramètres, un algorithme qui maximise la vraisemblance du vecteur de paramètres ou vecteur d'état, de la trajectographie relativement à la distribution de probabilité des bruits de mesure. Lorsque les bruits de mesure sont approximativement gaussien on utilise avantageusement des algorithmes de minimisation de l'erreur, par exemple quadratique, entre les signaux mesurés et les signaux reconstruits grâce au modèle servant à approximer la trajectoire de l'objet.

En effet, la technique qui maximise la vraisemblance est appelé de manière classique et générique « algorithme ou technique du Maximum de Vraisemblance ». Il existe plusieurs implémentations de cette technique. L'une peut être appelée « Recherche Exhaustive sur une grille ». Il s'agit de définir une grille à N dimensions sur chacun des paramètres constitutifs du vecteur d'état, où N note la taille de ce vecteur. Il s'agit ensuite de réaliser le calcul de la probabilité des mesures disponibles en fonction du vecteur d'état sur chacun des noeuds de la grille et de sélectionner celui qui maximise cette probabilité. Dans l'hypothèse que les bruits des mesures sont gaussiens, le problème du Maximum de Vraisemblance est équivalent à un problème des Moindres Carrées : il s'agit de minimiser la différence quadratique entre les mesures disponibles et les mesures reconstruites à partir du vecteur d'état. C'est l'approche que l'on utilise ici. L'algorithme employé dans les calculs est celui de Levenberg-Marquardt. On peut également utiliser les différentes variantes de l'algorithmes de Gauss-Newton et de Fletcher-Reeves. Enfin, lorsque les équations de mesure ne sont pas linéaires, ce qui n'est pas le cas ici, il existe toute une série d'algorithme des Moindres Carrées, éventuellement récursifs : RLS (« Récursiv Least Squares), MLS (« Mean Least Squares »), ...

Dans le but d'intégrer un grand nombre de ces mesures à chaque étape du processus de maximisation de la vraisemblance, un modèle de trajectoire de la source doit être retenu. Dans la suite, on se limite, à titre d'exemple, au cas du mouvement rectiligne uniforme et toutes les analyses, principalement celles concernant l'observabilité du vecteur de paramètres, sont relatives à ce type de modèle.

Cependant, d'autres modèles de trajectoires peuvent être utilisés de manière analogue. Dans le cas de l'exploitation de la contribution électromagnétique très basses fréquences, on peut citer l'exemple d'un virage autoroutier ou d'une piste d'aéroport si le véhicule ou l'avion sont instrumentés par une source dipolaire électromagnétique active, ou le cas d'un chenal pour sous-marin :

- les courbures du virage, de la piste ou du chenal sont régulières et connues ;
- le module de la vitesse de la source peut être considéré comme constant ;
- la position de la source sur cette trajectoire peut alors être décrite par un temps de retard par rapport à un temps de référence connu et par le module de la vitesse.

Dans le cas où on utilise la composante magnétostatique de la signature, l'hypothèse de mouvement rectiligne uniforme est également nécessaire pour que le moment magnétique du véhicule soit un vecteur constant (en temps et en espace), car sa partie induite dépend de l'orientation de la source dans le champ magnétique terrestre. Dans le cas où la trajectoire peut être modélisée par une ligne brisée, le vecteur d'état pourrait contenir N fois les trois composantes du moment magnétique, où N est le nombre de segments de droite constituant la ligne brisée.

Dans le cas d'un mouvement rectiligne uniforme (vitesse v=V=constante) dans un plan, la trajectoire est complètement déterminée par la position du mobile à un instant de référence connu $t_{ref}$, et par les composantes x et y de sa vitesse. En coordonnées cartésiennes, le vecteur d'état x, relativement à cet instant de référence, s'écrit :

$$\mathbf{x} = \begin{bmatrix} x_{t\,ref} & y_{t\,ref} & \dot{x} & \dot{y} \end{bmatrix}^T \qquad (6)$$

c'est-à-dire que x est la transposition de $x_{tref}\ y_{tref}\ \dot{x}\ \dot{y}$.

Des études ont montré l'intérêt des mesures gradientmétriques en un site de mesure et le bon conditionnement du problème. Pour l'observation de sources en mouvement rectiligne uniforme, certaines mesures du tenseur de gradient (équation (4)) sont redondantes. L'invention basée sur des magnétomètres scalaires consiste à former les trois seuls gradients indépendants possibles, c'est-à-dire à observer une combinaison linéaire de trois lignes du tenseur, puisque la seule direction de mesure accessible est celle du champ magnétique terrestre.

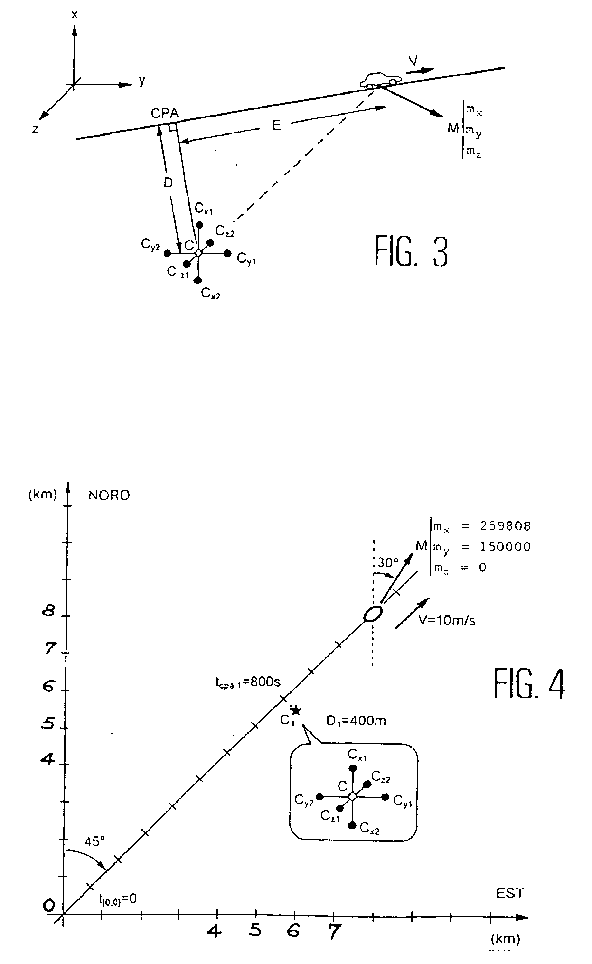

La figure 3 illustre un exemple d'une géométrie de passage d'une source magnétostatique par rapport à un système de mesure gradientmétrique scalaire. Trois gradients indépendants du champ magnétique sont accessibles grâce aux trois couples de capteurs $C_{xi}$, $C_{yi}$, $C_{zi}$ avec $i \in [1,2]$. La position du système est ici référencée par les coordonnées $x_c$ et $y_c$ du point C ; D note la distance entre le capteur et le point d'approche minimale (CPA) ; et E note la distance entre la source et le CPA.

Sur la figure 3 et dans la suite, on détaille les équations de mesure dans le cas d'une source caractérisée par ses propriétés magnétostatiques et dans le cas d'un capteur fixe. Des développements analogues peuvent être menés à partir des équations électromagnétiques très basses fréquences proposées par le document référencé [10] ou pour tenir compte d'un déplacement plus ou moins complexe du système de mesure (par exemple en aéroporté).

Dans le cas considéré, les composantes $m_x$, $m_y$ et $m_z$ du moment magnétique de la source sont des paramètres caractéristiques de l'état de la source et doivent donc être intégrés au vecteur d'état x (voir équation (6)) caractérisant la trajectoire :

$$x = \begin{bmatrix} x_{tref} & y_{tref} & \dot{x} & \dot{y} & m_x & m_y & m_z \end{bmatrix}^T \qquad (7)$$

Dans un souci de simplification des équations, on suppose que les directions de mesure des gradients sont celles des axes du repère précédent. On note $g_x$ la mesure du gradient scalaire dans la direction de l'axe x. Le vecteur de mesure $z_k$ (ou vecteur z à l'instant k) s'écrit alors :

$$z_k = \begin{bmatrix} g_x & g_y & g_z \end{bmatrix}_k^T \qquad (8)$$

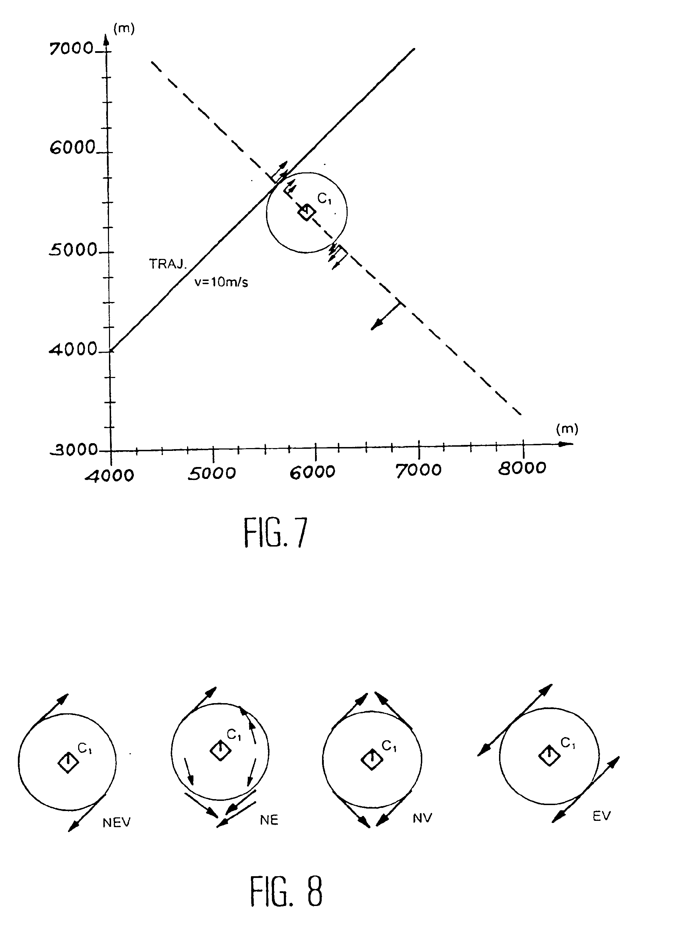

En pratique des directions de gradients non-orthogonales entre elles sont tout à fait envisageables et constituent même une force pour cette technique d'estimation. Il est cependant préférable, comme on le voit sur la figure 8, que les trois mesures de gradient donnent accès à chacune des trois directions possibles.

Dans le cas magnétostatique, chacune des trois mesures indépendantes de gradients s'écrit comme la différence de deux mesures de champ magnétique additionnée d'un bruit perturbateur, que l'on modélise de manière très réaliste par un bruit blanc gaussien centré w :

$$\begin{bmatrix} g_x \\ g_y \\ g_z \end{bmatrix} = h\left(\begin{bmatrix} x_{tref} \\ y_{tref} \\ \dot{x} \\ \dot{y} \\ m_x \\ m_y \\ m_z \end{bmatrix}, t_k, t_{ref}, x_{c\xi i}, y_{c\xi i}\right) + w_k = \begin{bmatrix} \dfrac{B_{Cx2} - B_{Cx1}}{x_2 - x_1} \\ \dfrac{B_{Cy2} - B_{Cy1}}{y_2 - y_1} \\ \dfrac{B_{Cz2} - B_{Cz1}}{z_2 - z_1} \end{bmatrix} + w_k \qquad (9)$$

où :

$$(10)$$

$$x = x_{tref} + \dot{x} \cdot (t_k - tref) \quad et \quad y = y_{tref} + \dot{y} \cdot (t_k - tref)$$

$$B_{C\xi i} = \frac{\mu_0}{4\pi r^5} \begin{bmatrix} \cos(Inc)\cos(Dec) \\ \cos(Inc)\sin(Dec)) \\ -\sin(Inc) \end{bmatrix}^T \begin{bmatrix} 3\Delta x^2 - r^2 & 3\Delta x\Delta y & 3\Delta x\Delta z \\ 3\Delta y\Delta x & 3\Delta y^2 - r^2 & 3\Delta y\Delta z \\ 3\Delta z\Delta x & 3\Delta z\Delta y & 3\Delta z^2 - r^2 \end{bmatrix} \begin{bmatrix} m_x \\ m_y \\ m_z \end{bmatrix}$$

où

$$\left\{ \begin{array}{l} \Delta x = x - x_{C\xi i} \\ r = \sqrt{\Delta x^2 + \Delta y^2 + \Delta z^2} \end{array} \right.$$

pour i=1 et 2 et $\xi$=x et y et z.

Inc et Dec notent l'inclinaison et la déclinaison du champ magnétique terrestre à l'endroit de la mesure, ce qui définit la direction de mesure des capteurs magnétiques scalaires.

A partir de K mesures du triplet $[g_x, g_y, g_z]^T$, la technique du maximum de vraisemblance sélectionne le vecteur de paramètres x tel que la différence entre les grandeurs mesurées et les signatures reconstruites à partir du vecteur x conduisent à une réalisation du bruit de mesure $w_k$ la plus conforme à sa densité de probabilité (ddp). Dans le cas de bruits de mesures centrés et gaussiens, le même vecteur de paramètres x minimise également l'écart quadratique entre les grandeurs mesurées et les signatures reconstruites et correspond à un problème des moindres carrés.

Cette estimation du vecteur d'état x peut être réalisée grâce à deux approches concurrentes :

La première, dite « exhaustive », s'appuie sur une grille plus ou moins fine des paramètres à estimer et sélectionne le vecteur maximisant la vraisemblance. Cette approche est souvent coûteuse en temps de calcul, surtout pour des vecteurs de sept paramètres, et la qualité de son résultat dépend de la finesse de la grille à parcourir.

La seconde, dite « par itérations successives », s'applique à la résolution des problèmes de type moindres carrés. Il s'agit de construire, à partir d'une estimation $x_k$, de la direction du plus fort gradient de la fonction de mesure et éventuellement de ses dérivées d'ordre deux, une estimation $x_{k+1}$ de meilleure qualité. Dans le cas de fonctions de mesure non-linéaire, ces techniques se heurtent à l'existence de nombreux minima locaux et donc au choix ou à la multiplication du nombre d'initialisations.

Les tests d'arrêt des méthodes « itératives » et de qualité d'estimation reposent sur un indicateur du $\chi^2$ qui réalise une différence quadratique entre les données mesurées et les mesures reconstruites à partir du vecteur d'état x courant ou estimé, pondérée par la matrice de covariance des mesures. Si on dispose de N mesures de K échantillons chacune, cet indicateur suit alors une loi du $\chi^2$ à NK-dim(x) degrés de liberté.

Dans le cas où la source évolue en mouvement rectiligne uniforme par rapport à un site gradientmétrique fixe donnant accès aux trois gradients indépendants de la mesure scalaire du champ magnétique, les paramètres observables sont :

- les grandeurs algébriques E/V et D/V, ainsi que le cap de la trajectoire à $\pi$ près,
  ou de manière équivalente (voir figure 7)
- l'azimut de la source à $\pi$ près, V/V pour chacun des deux azimuts, le paramètre r/V,

dans lequel D note la distance entre le capteur et le point d'approche minimale (CPA) ; E la distance entre la source et le CPA, r la distance source-capteur et V la vitesse de déplacement de la source et V son module.

Le dispositif ne doit pas être nécessairement placé dans le plan de la trajectoire. Il peut par exemple être placé en hauteur, dès lors que cette hauteur est connue et ne constitue pas une inconnue supplémentaire du problème. Il en va de même de sa dérivée dz/dt. Dans ce cas, les équations de mesure (9) et (10) doivent être légèrement modifiées.

**Exploitation de l'azimut de la source pour la trajectographie**

L'estimation de l'azimut d'une source magnétostatique ou électromagnétique très basses fréquences à partir d'un unique site d'observation est un résultat remarquable que l'on peut exploiter de différentes manières pour aboutir à la localisation/trajectographie de la source.

*• Restriction du nombre de degrés de liberté du problème*

Certaines applications permettent de réduire le nombre de degrés de liberté du problème de trajectographie. Dès lors que deux paramètres du vecteur d'état défini dans l'équation (7) sont liés par une relation linéaire connue, le vecteur x est observable à une unique solution fantôme près. Lorsqu'un seul des sept paramètres du vecteur d'état défini dans l'équation (7) est connu, le vecteur réduit constitué des six autres paramètres est également observable à une unique solution fantôme près.

• *Exploitation d'autres indiscrétions de la source et fusion de données*

Les sources réelles révèlent en général leur présence par l'intermédiaire de multiples indiscrétions (sonores, radiations électromagnétiques dans diverses bandes de fréquence) et peuvent également être détectées ou localisées par des techniques actives (radar, sonar actif, ..). On peut donc associer, en fonction de l'application envisagée, n'importe quelle technique complémentaire permettant de lever l'ambiguïté r/V.

Une variante de l'invention réside dans l'association de la méthode azimutale précédente et du phénomène Doppler observé dans le cas de sources rayonnant un signal bande étroite autour d'une fréquence centrale stable. Ceci est particulièrement caractéristique des sources acoustiques sous-marines observées en sonar passif.

Après une étape d'estimation (ou d' « extraction ») de la fréquence reçue, comme décrit dans les documents [12] et [13], on dispose d'une séquence $f_k$ de mesures de la fréquence acoustique reçue. Utilisées seules, on montre que ces mesures permettent d'estimer le vecteur de paramètres :

$$\mathbf{x} = \begin{bmatrix} t_{CPA} & D & V & f_0 \end{bmatrix}^T \qquad (11)$$

où $t_{CPA}$ note l'instant de passage au CPA ; D la distance capteur-CPA ; V la vitesse de la source ; et, $f_0$ la fréquence centrale émise.

Un premier intérêt de cette technique acoustique est que les paramètres manquants de la technique gradientmétrique scalaire D et V sont ici observables. Un second intérêt réside dans la compacité du système d'acquisition, un hydrophone omnidirectionnel, qui permet de conserver le caractère « monosite » du dispositif d'observation mixte, acoustique et magnétique.

Les techniques de maximum de vraisemblance permettent en pratique de prendre facilement en compte des mesures disponibles à des dates d'occurrence variées. Afin de simplifier les équations, on suppose que les fréquences d'échantillonnage des mesures de fréquences acoustiques et de gradients magnétiques sont identiques. De ce fait, le vecteur de mesure devient :

$$\mathbf{z}_k = \begin{bmatrix} g_x & g_y & g_z & f \end{bmatrix}_k^T \qquad (12)$$

On utilise ensuite un vecteur d'état similaire au vecteur défini dans l'équation (7) avec les paramètres de trajectographie donnés en coordonnées cartésiennes. La fréquence centrale émise $f_0$ est cependant un paramètre caractéristique de l'état du problème et doit donc être ajoutée à ce vecteur de paramètres :

$$\mathbf{x} = \begin{bmatrix} x_{tref} & y_{tref} & \dot{x} & \dot{y} & m_x & m_y & m_z & f_0 \end{bmatrix}^T \qquad (13)$$

On peut alors utiliser l'expression du phénomène Doppler exprimée en coordonnées cartésiennes, comme décrit dans le document référencé [14], ce qui conduit à la nouvelle équation de mesure :

$$
\begin{bmatrix} g_x \\ g_y \\ g_z \\ f \end{bmatrix}_k = h\left( \begin{bmatrix} x_{tref} \\ y_{tref} \\ \dot{x} \\ \dot{y} \\ m_x \\ m_y \\ m_z \\ \\ f_0 \end{bmatrix}, t_k, t_{ref}, x_c, y_c, x_{c\xi i}, y_{c\xi i} \right) + w_k
$$

$$
= \begin{bmatrix} \dfrac{B_{Cx2} - B_{Cx1}}{x_2 - x_1} \\[2mm] \dfrac{B_{Cy2} - B_{Cy1}}{y_2 - y_1} \\[2mm] \dfrac{B_{Cz2} - B_{Cz1}}{z_2 - z_1} \\[4mm] \\ f_0 \dfrac{1}{1 + \dfrac{1}{C} \dfrac{(x - x_c)\,\dot{x} + (y - y_c)\,\dot{y}}{\sqrt{(x - x_c)^2 + (y - y_c)^2}}} \end{bmatrix} + w_k
$$

$$(14)$$

Grâce à l'association des informations magnétiques et acoustiques bande étroite, la trajectographie de la source et l'estimation de son moment magnétique sont complètement observables à une unique solution fantôme près. La fréquence centrale émise est estimée sans fantôme.

• *Manoeuvre du porteur*

Une dernière variante est suggérée par les travaux décrits dans le document référencé [15] sur l'observabilité des systèmes de trajectographie seulement basés sur des relevés angulaires d'une unique plate-forme d'observation. Ce domaine concerne plus spécialement les antennes linéaires remorquées en sonar passif. En l'absence d'accélération du bâtiment porteur de l'antenne, le problème de la trajectographie d'une source se déplaçant elle-même en mouvement rectiligne uniforme n'est pas observable. Ici, le problème est légèrement différent car l'azimut n'est pas obtenu récursivement, mais seulement à l'issue du passage de la source.

Dans l'invention, le vecteur observable à partir d'une plate-forme en déplacement rectiligne uniforme (avion, système sous-marin tracté) est identique au cas d'une plate-forme fixe. Une manoeuvre du porteur est donc indispensable et permet de rendre le vecteur d'état défini dans l'équation (7) complètement observable, c'est-à-dire qu'il ne subsiste plus aucune solution fantôme. Lorsque trois gradients sont utilisés, la version trois dimensions du vecteur d'état peut également être complètement observable :

$$
x = \begin{bmatrix} x_{tref} & y_{tref} & z_{tref} & \dot{x} & \dot{y} & \dot{z} & m_x & m_y & m_z \end{bmatrix}^T \qquad (15)
$$

Plusieurs configurations de mesure peuvent assurer l'observabilité du vecteur défini dans les équations (7) ou (15) :

| Configurations à trois gradients | Nord, Est, Vertical | (15) observable |
|---|---|---|
| Configurations à deux gradients | Nord, Est | (15) observable |
| | Nord, vertical | (15) observable |
| | Est, Vertical | (15) observable |
| Configurations à un gradient | Nord | (7) observable |
| | Est | (7) observable |

Les configurations à un seul gradient conduisent à de très nombreux minima locaux qu'il est difficile de discriminer vis-à-vis de la vraie solution.

Le gradient vertical utilisé seul permet par ailleurs d'estimer le vecteur d'état défini dans l'équation (7) à une solution fantôme près. Le conditionnement est de très bonne qualité et permet de converger très facilement vers la solution vraie ou vers la solution fantôme.

Le vecteur d'état trois dimensions sans z présente la même observabilité que le vecteur défini dans l'équation (15) :

$$x = \begin{bmatrix} x_{tref} & y_{tref} & z_{tref} & \dot{x} & \dot{y} & m_x & m_y & m_z \end{bmatrix}^T \qquad (16)$$

Plus on effectue de manoeuvres, plus le résultat est précis.

*Exemples numériques*

Ces exemples sont représentatifs du problème de la localisation/trajectographie d'un mobile sous-marin.

La figure 4 illustre la géométrie de passage d'une source magnétostatique et acoustique en mouvement rectiligne uniforme relativement à un dispositif gradientmétrique et à un capteur acoustique. La source passe à 10 m/s à une distance au CPA $D_1$ égale à 400 mètres. Le moment magnétique de la source a un module de 300 000 A.m$^2$ incliné de 0˚ et de 30˚ de déclinaison. L'origine des temps est prise en (0,0) et le passage au CFA intervient à t=800 sec. La longueur de base des gradientmètres est de cinq mètres dans chacune des trois dimensions.

L'écart-type du bruit de mesure sur chaque mesure gradientmétrique est fixé à 3.10$^{-4}$ nT/m (nT note l'unité nano-tesla).

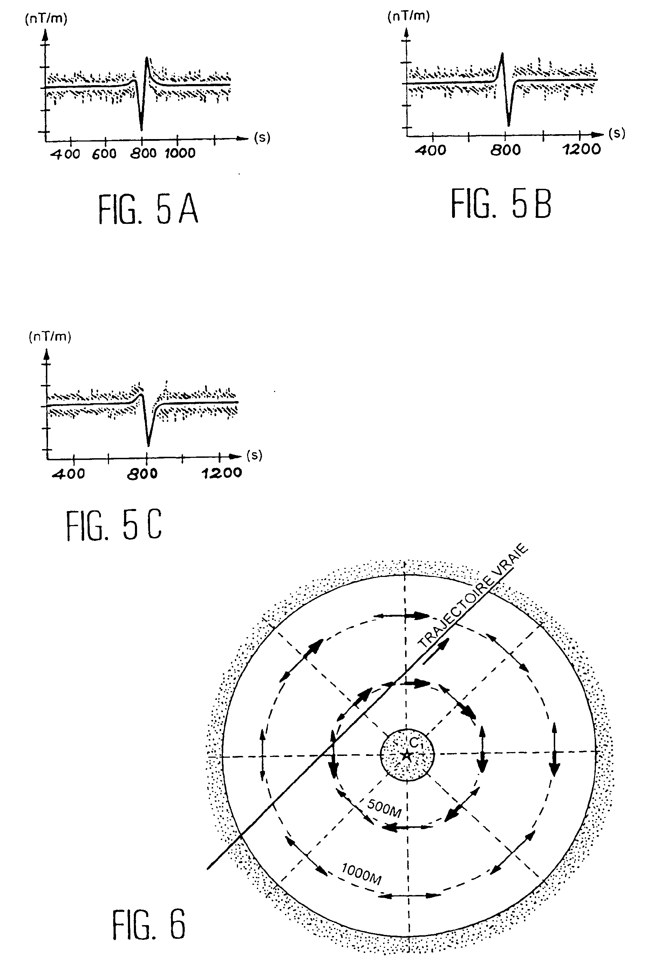

Les figures 5A, 5B et 5C illustrent respectivement des signatures relevées au site $C_1$ par trois dispositifs gradientmétriques scalaires dirigés dans les directions Nord, Est et Vertical vers la base. Les signatures théoriques non bruitées sont représentées au premier plan en noir. Un bruit de mesure de 3.10$^{-4}$ nT correspondant à une longueur de base de cinq mètres est additionné et est représenté en gris à l'arrière plan. La récurrence d'acquisition des mesures est de 2 Hz.

• *Initialisations multiples*

L'estimation du vecteur de paramètres maximisant la vraisemblance est réalisée grâce à un algorithme de moindres carrés non linéaire de Levenberg-Marquardt. Une difficulté de ce type d'algorithme de minimisation par itérations successives réside dans la procédure d'initialisation.

Il faut idéalement définir une grille d'initialisation pour chacun des sept paramètres du vecteur d'état, réaliser une minimisation avec chaque configuration initiale possible et classer les résultats soit comme solution vraie ou fantôme, soit comme minimum local. En pratique, ceci est difficilement réalisable à cause du trop grand nombre de paramètres et reste de plus dépendant du scénario.

On propose de restreindre le nombre d'initialisations suivant un principe analogue à celui exposé précédemment :

• Connaissant les potentialités du système, on peut évaluer une distance minimum $D_{min}$ en deçà de laquelle la description dipolaire de la source n'est plus valable et une distance maximum $D_{max}$ au-delà de laquelle la contribution de la source est en général noyée dans le bruit de mesure ;

- On choisit alors deux distances intermédiaires, ici 500 et 1 000 mètres, définissant les rayons de deux cercles sur lesquels on détermine huit positions initiales équiréparties ;
- L'instant de référence est approximativement choisi à l'instant de passage au CPA ;
- La direction de la vitesse initiale en chaque point est alors tangente au cercle ;
- Le module de la vitesse est initialisée à environ 8 m/s ;
- Les paramètres du moment magnétique sont complètement inconnus mais interviennent de manière linéaire dans l'équation de mesure : chacune des composantes est initialisée à $10^4$ A.m$^2$.

Ceci conduit à un total de trente deux initialisations présentées sur la figure 6. Cette figure 6 illustre une grille d'initialisation de l'algorithme. La base de chaque flèche correspond aux coordonnées des positions initiales et la flèche représente la di-rection et le sens de la vitesse associée. Les modules des vitesses sont d'environ 8 m/s. Les flèches fines représentent les initialisations qui ont convergé vers un minimum local. Les flèches épaisses représentent les initialisations qui ont convergé vers un minimum global.

Sur les trente deux initialisations neuf convergent vers des « minima globaux », c'est-à-dire que le paramètre du $\chi^2$ traduit un bon accord entre les mesures réelles sans bruit et les mesures reconstruites. En pratique, on met donc en place un système de tri des vecteurs d'état estimés par l'algorithme à partir des initialisations précédentes. Les critères sont basés sur le paramètre du $\chi^2$, mais aussi sur la connaissance a priori de la portée des systèmes de mesure, de la plage de vitesse d'évolution des sources et sur la plage des moments magnétiques des sources.

Les grandeurs géométriques estimées à partir de ces quatre initialisations sont positionnées sur la figure 7 et permettent de conclure que le vecteur d'état cartésien (7) n'est pas complètement observable.

La figure 7 illustre, en effet, une représentation des neuf initialisations qui convergent vers un « minimum global » pour une trajectoire TRAJ.

L'alignement de ces résultats est cependant remarquable et on vérifie que :

- les positions estimées du mobile à l'instant du passage au CPA appartiennent à l'unique droite passant par $C_1$ et par le vrai CPA ;
- la direction de la vitesse est toujours orientées selon la trajectoire ;
- le sens de la vitesse est orienté vers le Nord-Est pour les positions au Nord du capteur et vers le Sud-Ouest pour les positions au Sud du capteur ;
- enfin, la distance entre la position estimée et le capteur (qui est égale, étant donné l'instant de référence, à la distance au CPA D, divisée par le module de la vitesse estimée V) est constante. On retrouve ici le paramètre constant D/V intervenant dans les fonctions de base de Anderson.

Concernant l'estimation du moment magnétique, on peut remarquer que ses composantes ont des valeurs très différentes pour chacune des neuf solutions. En fait, l'équation de mesure est linéaire selon le moment magnétique : pour tout quadruplé des variables géométriques {$x_{tref}$, $y_{tref}$, dc/dt, dy/dt}, on est donc assuré de trouver un vecteur du moment magnétique unique qui satisfasse à la minimisation. Ceci valide l'approche de l'invention qui consiste à initialiser le moment magnétique par un seul vecteur de trois composantes.

Lorsque l'instant de référence n'est pas l'instant de passage au CPA, il est possible de reconstruire le paramètre D/V grâce à l'orientation de la trajectoire fournie par les composantes de la vitesse de la source. La distance entre le capteur et la position estimée étant toujours connue relativement à la vitesse, on a également accès au paramètre de retard au CPA E/V utilisé dans le cadre des fonctions de la base de Anderson.

*• Restriction du nombre de degrés de liberté du problème*

Dans cet exemple, on considère que l'une des composantes de la vitesse est connue. Ceci ne revient ni à fixer le module de la vitesse, ni à fixer sa direction, mais permet d'identifier sa deuxième composante si la direction est observable à partir des mesures gradientmétiques. Pour ces essais, le vecteur d'état à estimer devient donc :

$$\mathbf{x'} = \begin{bmatrix} x_{tref} & y_{tref} & \dot{y} & m_x & m_y & m_z \end{bmatrix}^{\mathsf{T}} \qquad (16)$$

Avec cette technique appliquée à des signaux non bruités, on observe que huit des trente deux initialisations convergent soit vers le vecteur d'état réel, soit vers sa solution fantôme diamétralement opposée (voir la partie NEV sur la figure 8). Les autres initialisations convergent vers des minima locaux.

La figure 8 illustre, en effet, une représentation des variables géométriques du vecteur x' pour les initialisations ayant convergé vers un minimum global. N note le gradient Nord, E le gradient Est et V le gradient Vertical. NEV note l'association des trois gradients. On obtient huit convergences dans NEV, onze dans NE, treize dans NV et onze dans EV.

Sur cette même figure, on représente le rôle joué par chacune des directions du gradient dans le processus d'estimation. Le gradient vertical s'avère indispensable et la troisième direction, Nord ou Est, permet d'éliminer des solutions fantômes.

Le tableau suivant présente les performances d'estimation du vecteur d'état réduit x'. On utilise des simulations de Monte-Carlo basées sur deux cents réalisations indépendantes du bruit de mesure dans le cadre du scénario décrit précédemment. La première ligne fait apparaître la configuration de gradient, b note le biais et σ l'écart-type calculés à partir des deux cents résultats de minimisation.

|  | NV | EV | NEV |
|---|---|---|---|
| $x_{tref} = 6000$ m | b = 0.88 | b = 0.10 | b = 0.72 |
|  | σ = 12.98 | σ = 14.67 | σ = 10.24 |
| $y_{tref} = 6000$ m | b = 2.32 | b = -0.07 | b = 1.43 |
|  | σ = 19.18 | σ = 18.66 | σ = 13.79 |
| dx/dt |  |  |  |
| dy/dt = 7.0711 m/s | b = 2.93 | b = 0.75 | b = -2.95 |
| $\times 10^{-2}$ | σ = 39.70 | σ = 43.28 | σ = 31.58 |
| $m_x = 259808$ A.m² | b = -704. | b = -2105. | b = 498. |
|  | σ = 24892. | σ = 30888. | σ = 20879. |
| $m_y = 150000$ A.m² | b = 709. | b = -1842. | b = 741. |
|  | σ = 22419. | σ = 27777. | σ = 19229. |
| $m_z = 0$ A.m² | b = -135. | b = -738. | b = 215. |
|  | σ = 7108. | σ = 6246. | σ = 4783. |

*• Fusion des trois mesures gradientmétriques scalaires et d'une mesure de fréquence acoustique bande étroite*

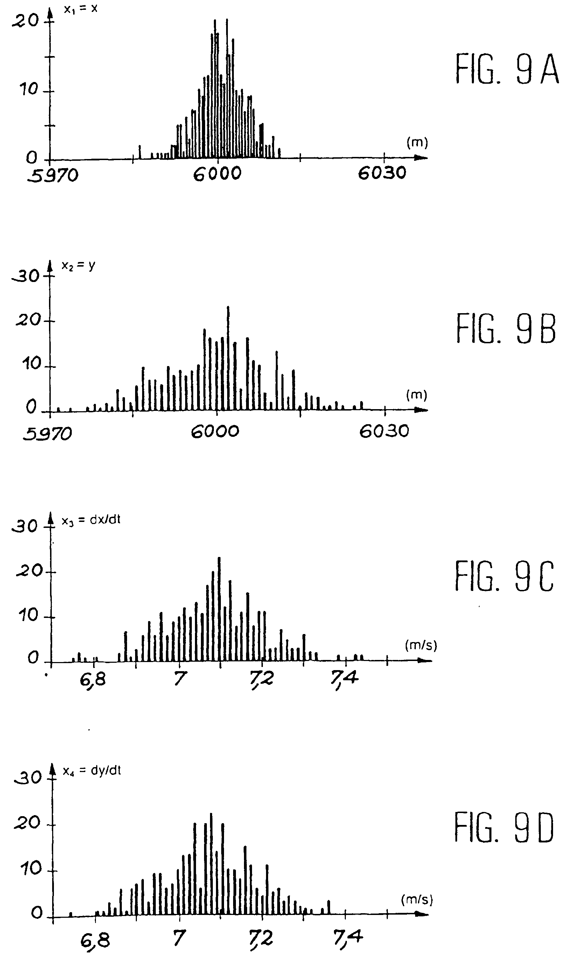

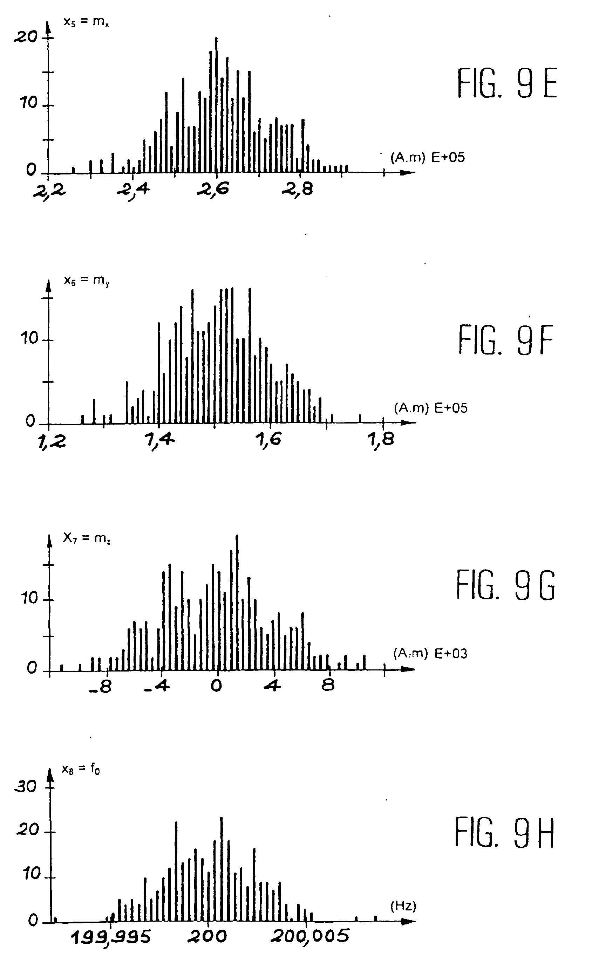

A partir du scénario de la figure 4, on prend également en compte l'effet Doppler dû au déplacement relatif de la source et du capteur. La fréquence centrale du signal acoustique émis est de 200 Hz et est perturbée par un bruit d'écart-type 0.05 Hz dans cette simulation. En utilisant l'équation de mesure (14), les simulations de Monte-Carlo conduisent aux résultats des figures 9.

Ces figures 9 illustrent des simulations de Monte-Carlo de 500 réalisations. Le CPA intervient à t=800 s. La source se déplace à 10 m/s dans la direction Nord-Est à une distance d'approche minimale de 400 m. Le moment magnétique de la source a un module de 300000 A.m² incliné de 0° et de 30° de déclinaison. La source émet un bruit bande étroite centré autour de 200 Hz. La récurrence d'acquisition des mesures est de 2 Hz. Les écarts-types de bruit sont [$3.10^{-4}$, $3.10^{-4}$, $3.10^{-4}$, 0.05] (en [nT/m, nT/m, nT/m, Hz]). On indique le biais $b_{est}$ et l'écart-type $\sigma_{est}$ de chaque paramètre, on a ainsi les valeurs suivantes :

- figure 9A : $x_1 = x$
  $b_{est}$ = 0.9082E-01
  $\sigma_{est}$ = 0.4373E+01
- figure 9B : $x_2 = y$
  $b_{est}$ = 0.6948E+00
  $\sigma_{est}$ = 0.9735E+01
- figure 9C : $x_3 = dx/dt$
  $b_{est}$ = 0.7178E-02
  $\sigma_{est}$ = 0.1151E+00

- figure 9D : $x_4 = dy/dt$
  $b_{est} = 0.7445E\text{-}02$
  $\sigma_{est} = 0.1136E\text{+}00$
- figure 9E : $x_5 = m_x$
  $b_{est} = 0.6858E\text{+}03$
  $\sigma_{est} = 0.1172E\text{+}05$
- figure 9F : $x_6 = m_y$
  $b_{est} = 0.2117E\text{+}03$
  $\sigma_{est} = 0.8654E\text{+}04$
- figure 9G : $x_7 = m_z$
  $b_{est} = 0.3172E\text{+}03$
  $\sigma_{est} = 0.3991E\text{+}04$
- figure 9H : $x_8 = f_0$
  $b_{est} = 0.1526E\text{-}04$
  $\sigma_{est} = 0.2385E\text{-}02$

***Applications industrielles***

*• Application routière : comptage, classification et estimation de la vitesse des véhicules*

La première application envisagée est une application d'analyse du trafic autoroutier. Les fonctions classiques de détection et de comptage des véhicules peuvent être réalisées à partir d'un seul site d'instrumentation, qui de plus n'est pas nécessairement placé dans ou sous la chaussée comme c'est souvent le cas dans les systèmes existants.

La grande richesse du vecteur d'état estimé x permet par ailleurs de connaître le sens et le numéro de la voie de circulation, la position et la vitesse du véhicule sur cette voie, et permet enfin d'estimer la nature du véhicule (moto, voiture, utilitaire, camion).

Pour cette application, les mesures gradientmétriques peuvent être utilisées seules car le fait que les véhicules se situent nécessairement sur la route permet de réduire le nombre de degrés de liberté du problème. Le dispositif doit être placé le long d'une portion rectiligne de l'autoroute et un des axes du repère cartésien, par exemple y, est choisi dans la direction de l'autoroute. Dans ce cas, le paramètre $dx/dt$ est toujours nul et le paramètre x prend une valeur parmi N, où N est le nombre de voies de circulation.

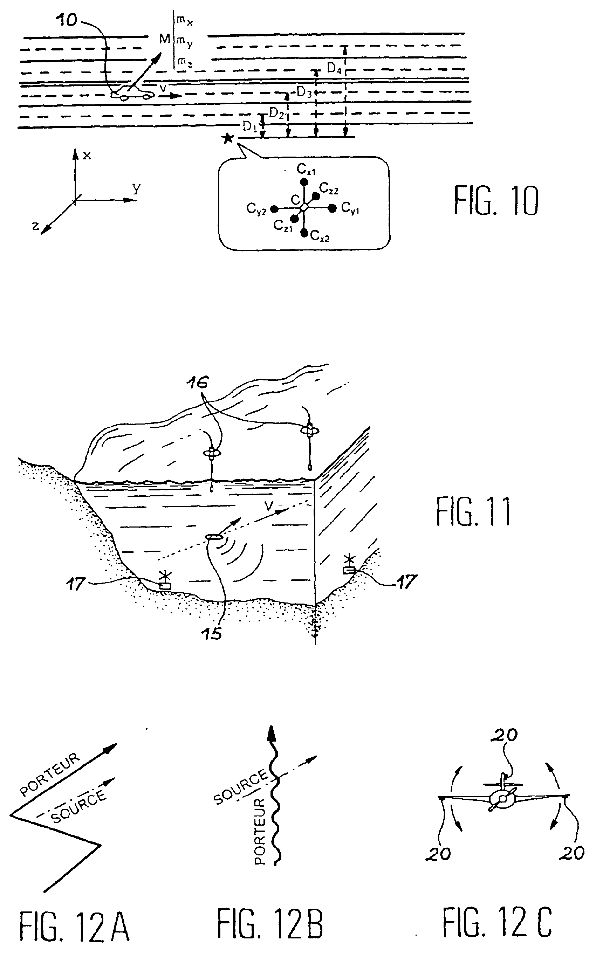

La figure 10 illustre un dessin de principe du système d'analyse du trafic routier basé sur un site d'instrumentation unique placé à proximité des voies de circulation. Il n'est pas nécessaire que le dispositif de l'invention soit placé dans le plan des voies de circulation. Dans le cas considéré sur cette figure, il existe quatre voies de circulation et un véhicule 10.

*• Application en surveillance sous-marine : capteur de surveillance immergé*

L'invention permet d'envisager des réseaux de surveillance avec des distances inter-capteurs maximales, puisqu'un seul site d'observation est nécessaire pour la trajectographie.

Les sources sous-marines évoluent en général dans un plan horizontal dont la profondeur peut être supposée connue ou non. En eaux peu profondes, l'hypothèse selon laquelle les sources évoluent dans le plan des capteurs est communément acceptée car les extensions horizontales sont largement supérieures à l'épaisseur d'eau. Du fait de leur grande inertie et de l'absence d'obstacle, les bâtiments se déplacent généralement en suivant des caps, donc en mouvement rectiligne uniforme.

Hormis ces hypothèses, aucun autre degré de liberté du problème ne peut être éliminé. On préconise donc d'utiliser l'approche qui associe les mesures gradientmétriques scalaires avec des mesures acoustiques omnidirectionnelles. Ces dernières permettent d'exploiter l'effet Doppler subi par les peignes de raies émis par les sources sous-marines.

La figure 11 illustre un schéma de principe de l'application sous-marine, avec une source 15, des bouées dérivantes 16, et des sites d'observation 17 posés au fond.

*• Application en surveillance sous-marine aéroportée*

Dans cette application, le dispositif d'acquisition est placé à bord d'un avion ou dans des « oiseaux » tractés par ce dernier. Il est donc possible d'opérer des manoeuvres et donc d'estimer le vecteur de localisation cartésien défini dans les équations (7) ou (15) sans solutions fantômes.

Une approche consiste à placer un capteur 20 au bout de chaque aile, un à la queue de l'avion et un dans un « oiseau » tracté. A condition de savoir positionner chacun de ces capteurs dans un référentiel lié à l'avion, par exemple par GPS, on dispose des trois directions du gradient spatial du champ magnétique avec des longueurs de base bien adaptée.

Le type de manoeuvre réalisée conditionne la précision et l'existence de minima locaux lors de la phase de minimisation. On peut considérer des manoeuvres franches avec changement de cap dès que la source est détectée ou des petits déplacements du dispositif, permettant à la fois de garder un cap globalement constant tout en assurant l'observabilité du problème.

Les figures 12 illustrent différents types de manoeuvre permettant de rendre le vecteur d'état de localisation observable :

- la figure 12A illustre une manoeuvre franche avec changement de cap ;
- la figure 12B illustre une manoeuvre sans changement de cap ;
- la figure 12C illustre des oscillations du porteur à partir de la détection.

*• Localisation d'objet magnétique grâce à une flûte tractée*

Comme dans l'application précédente, le dispositif de mesure est en déplacement, ce qui permet d'effectuer des manoeuvres. Dans ce cas, les capteurs peuvent être situés sur la même flûte et être écartés de celle-ci grâce à des dérives, ou être placés à l'extrémité de flûtes différentes. Dans tous les cas, les capteurs doivent être repérés les uns par rapport aux autres, par exemple grâce à des systèmes de localisations, ou « pingers », acoustiques.

REFERENCES BIBLIIOGRAPHIQUES

[1] « Geomagnetism » (J.A.Jacobs, Academic Press, Londres, 1989)

[2] « Instrumentation And Experimental Methods For oceanic Studies » de H.H. Filloux (J.A. Jacobs (ed.) Geoelectromagnetism, volume 1, pages 143-248, 1987)

[3] « Dispositif de mesure d'un champ électrique dans un fluide conducteur et procédé utilisant un tel dispositif » de J. Mosnier (brevet français n˚ 84 19577 (FR 2 575 296-A1), 27 juin 1986

[4] « The Fluxgate Magnetometer (Review) » de F. Primdahl (J. Phys. E. : Sci. Instrum., volume 12, pages 241-253, 1979)

[5] « Advances Superconducting Gradiometer/Magnetometer Arrays And A Novel Signal Processing Technique » de W.M. Wynn, C.P. Frahm, P.J. Carroll, R.H. Clark, J. Wellhoner, M.J. Wynn (IEEE Trans. On magnetics, volume MAG-11, N˚ 2, pages 701-707, mars 1975)

[6] « Traitement en temps réel du signal issu d'une sonde magnétométrique pour la détection d'anomalie magnétique » de R. Blanpain (Thèse de l'I.N.P.G., octobre 1979)

[7] « Détection/localisation d'objet ferromagnétique par réseau de capteurs : approche classique et approche neuronale » de Y. Caritu (Thèse de l'I.N.P.G., mai 1996)

[8] « Localisation et positionnement d'un ou plusieurs objets marqués magnétiquement à l'aide de mesures magnétiques directionnelles » de R. Blanpain, A. Dumont et C. Sonrel (brevet FR-2586302)

[9] « Computerized Model Demonstrating Magnetic Submarine Localization » de A.D. McAulay (IEEE Trans. Aerosp. Electron. Syst., pages 246-254, mai 1977)

[10] « The Detection Of ULF-ELF Emission Of Moving Ships » de F.X. Bostick, H.W. Smith et J.E. Boeh (Final Report, AD A037 830, Electrical Engineering Research Laboratory, University of Texas, Austin, mars 1977, pages23 à 28)

[11] « Analyse de la propagation électromagnétique en milieu marin & méthode de localisation spatiale d'une source dipolaire » de J.Y. Bruxelle (Thèse de l'Université des Sciences et Technologies de Lille, mai 1995)

[12] « A Bayesian Approach To Frequency Line Tracking » R.E. Bethel et J.A. Gauss (Proc. IEEE EASCON, pages 286-290, 1981)

[13] « Frequency Line Tracking On A Lofargram : An Efficient Wedding Between Probabilistic Data Association Modelling And Dynamic Programming Techniques » de C. Jauffret et D. Bouchet (Asilomar Conf., Monterey, USA, 1996)

[14] « Data Association From Two Acoustic-Magnetic Measurement Sites » de G. Dassot & R. Blanpain (IEEE Workshop On Digital Signal Processing, Loen, Norge, septembre 1996)

[15] « Observability Criteria For Bearings-Only Target Motion Analysis » de S.C. Nardone & V.J. Aidala (IEEE Trans. Aerosp. Electron. Syst., volume AES-17, pages 162-166, mars 1981)

# EP 1 012 632 B1

**Revendications**

1. Procédé de localisation d'un objet en mouvement comportant les étapes suivantes :

   - acquisition de mesures scalaires par un ensemble de capteurs dont la position est connue à chaque instant ;
   - approximation de la trajectoire de l'objet par un modèle ;

   **caractérisé en ce qu'**il comprend en outre des étapes de :

   - combinaison des mesures issues de chaque capteur pour obtenir des mesures de gradients spatiaux représentatifs de la perturbation magnétique vectorielle de l'objet en mouvement ;
   - estimation d'un vecteur de paramètres caractéristique du modèle en fonction des mesures de gradients et en fonction de la position des capteurs ;
   - détermination de la position de l'objet en fonction de la position des capteurs et du vecteur de paramètres;

   et **en ce que** les capteurs sont regroupés en un site unique.

2. Procédé selon la revendication 1, dans lequel le mouvement est modélisé par un mouvement rectiligne uniforme, le vecteur de paramètres étant ($\theta$, r/v, v/v), $\theta$ étant l'azimut de l'objet à un instant de référence pris par rapport au nord, r la distance source-capteur au même instant de référence, v la vitesse de l'objet et v le module de la vitesse.

3. Procédé selon la revendication 1, dans lequel il y a combinaison de mesures magnétiques avec des mesures acoustiques.

4. Procédé selon la revendication 1, dans lequel on exploite, pour l'estimation du vecteur de paramètres, un algorithme qui maximise la vraisemblance de ce vecteur de la trajectographie relativement à la distribution de probabilité des bruits de mesure.

5. Procédé selon la revendication 4, dans lequel, lorsque les bruits de mesure sont approximativement gaussiens, on utilise des algorithmes de minimisation de l'erreur entre les signaux mesurés et les signaux reconstruits grâce au modèle servant à approximer la trajectoire de l'objet.

6. Procédé selon la revendication 1, dans lequel on associe la méthode azimutale et le phénomène Doppler observé dans le cas de sources rayonnant un signal bande étroite autour d'une fréquence centrale stable.

7. Procédé selon la revendication 1,dans lequel on réalise une manoeuvre du dispositif porteur de capteur.

8. Utilisation du procédé selon l'une quelconque des revendications précédentes, pour le comptage, la classification et l'estimation de la vitesse de véhicules.

9. Utilisation du procédé selon l'une quelconque des revendications 1 à 8 pour la surveillance sous-marine.

**Patentansprüche**

1. Verfahren zur Lokalisierung eines sich bewegenden Objekts, das die folgenden Schritte umfasst:

   - Erfassung von skalaren Messungen durch eine Gruppe von Sensoren, deren Position zu jedem Zeitpunkt bekannt ist;
   - Approximation des Wegs des Objekts durch ein Modell;

   **dadurch gekennzeichnet, dass** es außerdem folgende Schritte umfasst:

   - Kombination der von jedem Sensor stammenden Messungen, um Messungen von Raumgradienten zu erhalten, die repräsentativ sind für die vektoriellen magnetischen Störungen des sich bewegenden Objekts;
   - Ermittlung eines charakteristischen Parametervektors des Modells in Abhängigkeit von den Gradientenmessungen;
   - Bestimmung der Position des Objekts in Abhängigkeit von der Position der Sensoren und dem Parametervektor;

**und dadurch, dass** die Sensoren an einem einzigen Ort zusammengefasst sind.

2. Verfahren nach Anspruch 1, bei dem die Bewegung durch eine gleichmäßige geradlinige Bewegung modelliert wird, wobei der Parametervektor (θ, r/v, v/v) ist, θ der auf Nord bezogene Azimut des Objekts zu einem Bezugszeitpunkt, r die Distanz Quelle-Sensor zu demselben Bezugszeitpunkt, v die Geschwindigkeit des Objekt und v der Modul der Geschwindigkeit ist.

3. Verfahren nach Anspruch 1, bei dem magnetische Messungen mit akustischen Messungen kombiniert werden.

4. Verfahren nach Anspruch 1, bei dem man zur Ermittlung des Parametervektors einen Algorithmus benutzt, der die Wahrscheinlichkeit dieses Wegaufzeichnungs-Vektors in Relation zu der Wahrscheinlichkeitsverteilung der Messgeräusche maximiert.

5. Verfahren nach Anspruch 4, bei dem man - wenn die Messgeräusche annähernd Gaußsches Rauschen sind -, Algorithmen zur Minimierung des Fehlers zwischen den gemessenen Signalen und den dank des Modells rekonstruierten Signalen benutzt, das zur Approximation des Wegs des Objekts gedient hat.

6. Verfahren nach Anspruch 1, bei dem man die Azimut-Methode und das Doppler-Phänomen assoziiert, beobachtet im Falle von Quellen, die ein Schmalbandsignal um eine stabile zentrale Frequenz herum senden.

7. Verfahren nach Anspruch 1, bei dem man ein Manöver der Sensorträgervorrichtung ausführt.

8. Anwendung des Verfahrens nach einem der vorangehenden Ansprüche, das dem Zählen, der Klassifizierung und der Geschwindigkeitsermittlung von Fahrzeugen dient.

9. Anwendung des Verfahrens nach einem der vorangehenden Ansprüche 1 bis 8 zur Unterwasserüberwachung.

## Claims

1. Positioning process for a moving object, **characterized in that** it comprises the following steps:

   - scalar measurements are acquired by a set of electromagnetic sensors all installed on the same site, at a position known at each instant;
   - the trajectory of the object is determined approximately by a model;

   **characterized in that** it also comprises the following steps:

   - the measurements output from each sensor are combined to obtain spatial gradient measurements representative of the vector electromagnetic disturbance of the moving object;
   - a vector of parameters characteristic of the model is estimated as a function of gradient measurements and as a function of the position of the sensors;
   - the position of the object is determined as a function of the position of the sensors and the parameters vector; and **in that** the sensors are grouped at one site.

2. Process according to claim 1 in which the movement of the object is modelled by a uniform movement along a straight line, the parameters vector being (θ, r/v, v/v), where θ is the azimuth of the object at a reference instant taken with respect to the North, r is the source/sensor distance at the same reference instant, v is the speed of the object and v is the modulus of the speed.

3. Process according to claim 1, in which magnetic measurements are used in combination with acoustic measurements.

4. Process according to claim 1, in which the parameters vector or state vector is estimated using an algorithm that maximizes the probability of this tracking vector with respect to the probability distribution of measurement noise.

5. Process according to claim 4, in which, when the measurement noise is approximately gaussian, minimization algorithms are used to minimize the error between the measured signals and the signals reconstructed with the model used to approximate the trajectory of the object.

6. Process according to claim 1, in which the azimuth method and the Doppler phenomenon observed in the case of sources radiating a narrow band signal around a stable central frequency are used together.

7. Process according to claim 1, in which the device carrying the sensor is manoeuvred.

8. Use of the process according to any one of the previous claims for counting, classifying and estimating the speed of vehicles.

9. Use of the process according to any one of claims 1 to 8 for submarine surveillance.

FIG. 1

$B_1$

$U_t$

$B_{signal}$

$B_{total}$

EP 1 012 632 B1

FIG. 2

FIG. 3

FIG. 4

FIG. 5 A

FIG. 5 B

FIG. 5 C

FIG. 6

FIG. 7

FIG. 8

FIG. 9 A

FIG. 9 B

FIG. 9 C

FIG. 9 D

FIG. 9 E

FIG. 9 F

FIG. 9 G

FIG. 9 H

FIG. 10

FIG. 11

FIG. 12 A

FIG. 12 B

FIG. 12 C